# EUROPÄISCHE PATENTSCHRIFT

(11) **EP 1 190 923 B1**
(45) Veröffentlichungstag und Bekanntmachung des Hinweises auf die Patenterteilung: **14.09.2005**
(21) Anmeldenummer: 01121518.3
(22) Anmeldetag: 08.09.2001
(51) Int. Cl.: B60T 11/26, B60T 11/22, B60T 17/06

(54) **Behälterbefestigung**
Reservoir fixation
Fixation d'un réservoir

(30) Priorität: 25.09.2000 DE 10047325
(43) Veröffentlichungstag der Anmeldung: 27.03.2002
(73) Patentinhaber: Continental Teves AG & Co. oHG, 60488 Frankfurt (DE)
(72) Erfinder: Tandler, Peter, 61479 Kronberg/Ts. (DE); Loke, Jörg, 65611 Brechen (DE); König, Harald, 61239 Ober-Mörlen (DE); Krebs, Werner, 65582 Hambach (DE); Bischoff, Andreas, 61118 Bad Vilbel (DE); Zagler, Berthold, 64846 Gross-Zimmern (DE)

(56) Entgegenhaltungen:
- EP-A- 0 372 909
- DE-A- 4 115 063
- DE-A- 19 847 323
- DE-A- 19 921 195
- DE-U- 1 831 509
- FR-A- 2 324 928
- US-A- 4 472 943

## Beschreibung

Erfindung betrifft eine aus einem Ausgleichsbehälter und einem Hauptzylinder bestehende Baugruppe für eine Bremsanlage in Kraftfahrzeugen. Da beim Befüllen einer hydraulische Bremsanlage ein erheblicher Überdruck auftreten kann muß die Befestigung des Ausgleichsbehälters an dem Hauptzylinder gesichert werden. Hierzu wurde in der DE-PS 3021434 vorbeschrieben, den Ausgleichsbehälter mittels geeigneter Befestigungslasche und mittels einer Schraubverbindungen an dem Hauptzylinder zu befestigen. Eine derartige Befestigung ist allerdings wenig kostengünstig und erfordert spezielle Werkzeuge. Sie ist daher für eine einfache Montage auch nur wenig geeignet.

Aus der DE 19921195 A1 ist es bekannt, den Ausgleichsbehälter mittels eines elastisch verformbaren Befestigungselementes mit einem ersten starren und einem zweiten elastisch verformbaren, bogenförmigen Schenkel an dem Hauptzylinder zu befestigen.

Die Erfindung geht daher aus von einer Baugruppe der sich aus dem Oberbegriff des Hauptanspruchs ergebenden Gattung. Der Erfindung liegt folgende Aufgabe zugrunde. Gesucht wird nach einer Möglichkeit, einen Ausgleichsbehälter für Bremsflüssigkeit nach Montage auf einen Tandemhauptzylinder zu verriegeln (formschlüssig). Die Verriegelung muß, trotz der auf die Schnittstelle einwirkenden Kräfte speziell beim Befüllvorgang mit Bremsflüssigkeit, aber auch durch mechanisch eingeleitete Kräfte, die korrekte Verbindung zwischen Tandemhauptzylinder und Ausgleichsbehälter jederzeit sicherstellen können. Das Verbindungselement sollte kostengünstig in der Herstellung und einfach zu montieren sein (Montage ohne Werkzeug). Eine visuelle Kontrolle der Schnittstellensicherung sollte eindeutig sein. Ebenso muß eine zerstörungsfreie und schnelle Demontage möglich sein.

Die Aufgabe wird durch die sich aus dem kennzeichnenden Teil des Anspruchs 1 ergebende Merkmalskombination gelöst. Die Erfindung besteht im Prinzip also darin dass im Bereich eines Befestigungsansatzes an dem Ausgleichsbehälter Arretierungsmittel vorgesehen sind, welche den Befestigungsstift gegen eine Bewegung in axialer Richtung sichern, wodurch verhindert wird, daß der Befestigungsstift durch die an dem Ausgleichsbehälter angreifenden Kräfte sich aus seiner Haltestellung löst. Hierdurch wird der Befestigungsstift nicht nur an einer Bewegung in seiner axialen Lage gehindert, wodurch er seine Verriegelungsstellung nicht verlassen kann. Gleichzeitig wird durch die vorgeschlagene Maßnahme eine optische Kontrolle sichergestellt, die anzeigt, daß der Befestigungstift verriegelt ist.

Für das vorgeschlagene Arretierungsmittel ergibt sich eine besonders einfache Ausgestaltung durch die Verwendung der Maßnahmen nach Anspruch 2. Es wird daher kein Werkzeug benötigt, um den Befestigungsstift in seine Verriegelungslage zu bringen bzw. den Stift aus dieser Lage zu lösen.

Die eingangs erwähnte Erfindung zur Sicherung der Schnittstelle "Ausgleichsbehälter-Tandemhauptzylinder" bedient sich eines abgewinkelten Drahtstiftes oder entsprechenden Kunststoffformstiftes mit ungleicher Schenkellänge und zwei spiegelbildlich ausgeführten Einrastnuten, welche in den Behälterbefestigungslaschen integriert sind.

Ein Ausführungsbeispiel der Erfindung werden nachfolgend anhand der Zeichnung erläutert. Darin zeigt:
- Fig. 1: eine erste Ausführungsformen der Erfindung und
- Fig. 2: eine zweite Ausführungsform der Erfindung.

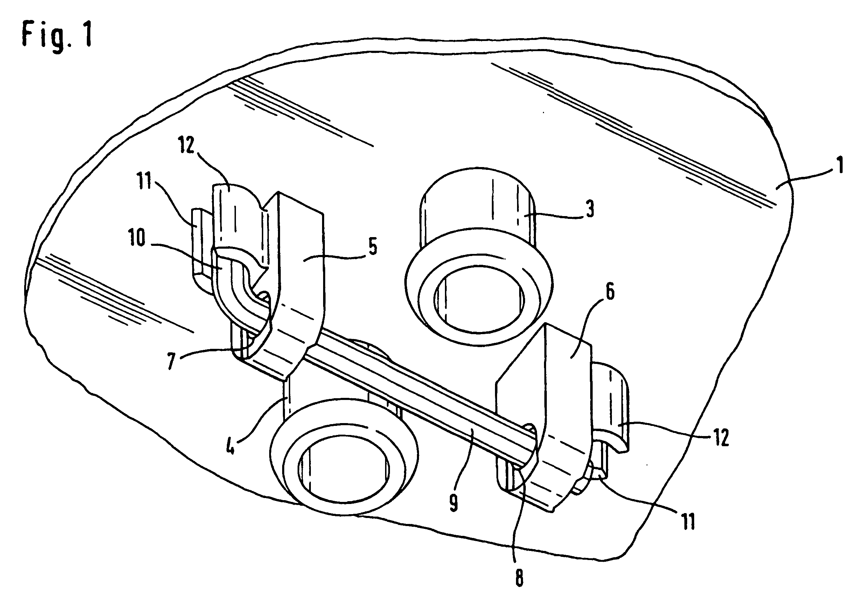

Die Fig.1 zeigt in herausgebrochener und perspektivischer Darstellung einen Abschnitt aus dem Boden des Ausgleichsbehälters, wobei der Betrachter schräg von unten auf den Boden blickt. Aus dem Boden 1 ragen in üblicher Weise zwei Anschlußstutzen 3,4 die im zusammengebauten Zustand der Baugruppe von entsprechenden Anschlußöffnungen des Hauptzylinders aufgenommen werden. Der Betrachter erkennt weiterhin zwei sich parallel zueinander erstreckende Befestigungsansätze 5,6 die Öffnungen 7,8 aufweisen, welche miteinander verfluchten. Durch diese Öffnungen 7,8 ragt ein Befestigungsstift 9 der einen Ansatz 10 aufweist welcher sich senkrecht zur Längsrichtung des Befestigungsstiftes 9 erstreckt. Beide Befestigungsansätze Ziffern 5,6 sind mit jeweils zwei zueinander parallelen Federleisten 11,12 versehen die von denen Außenflächen der Befestigungsansätze 5,6 im wesentlichen senkrecht abstehen. Die Federleisten 11,12 sind einstückig mit den Befestigungsansätze 5,6 verbunden wobei die Befestigungsansätze wiederum mit dem Behälter 1 vergossen sind.

Wie aus der Zeichnung ersichtlich sind die Federleisten 11,12 jeweils derart ausgestaltet, daß der Ansatz 10 des Befestigungsstiftes 9 in axialer Richtung des Befestigungsstiftes 9 zwischen die Leisten eingerastet werden kann. Der Befestigungsstift 9 kann aus einem Drahtstück vorzugsweise mit rundem. Andere Querschnitte, z. B. sechseckig, sind denkbar.

Die Funktionsweise der Verriegelung verläuft wie folgt: Nach dem Aufstecken des Ausgleichbehälters auf den Tandemhauptzylinder wird der abgewinkelte Drahtstift mit seinem längeren Schenkel durch die beiden Behälterbefestigungslaschen und der dazwischenliegenden Behälterbefestigungsbohrung des THz's geschoben. Der verkürzte Schenkel des Winkelstiftes wird mit etwas erhöhter Kraft je nach Ausführung axial oder seitlich in die Einrastnut gedrückt, und verbleibt in dieser Position. Ein ungewolltes Herausspringen des Ausgleichbehälters aus dem Tandemhauptzylinder wird somit erfolgreich vermieden. Die Demontage erfolgt durch Herausdrücken des Winkelstiftes aus der Einrastnut (bei sehr großen zum Lösen notwendigen Kräften gegebenenfalls auch unter Zuhilfenahme eines kleinen Werkzeuges) und Herausziehen des Winkelstiftes aus den Behälterbefestigungslaschen.

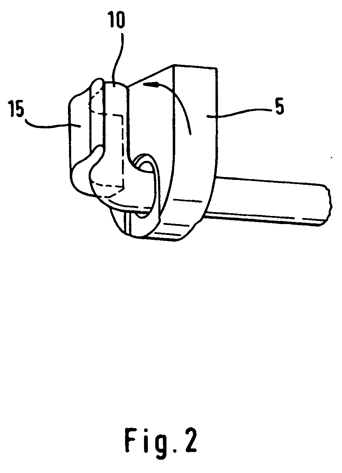

In Fig. 2 ist an einen Befestigungsansatz 5 ein Rastfinger 15 vorgesehen, in den der Ansatz 10 um die Längsachse des Befestigung Stiftes 9 hinein verschwenkt werden kann. Der Rastfinger 15 ist wiederum mit dem Befestigungsansatz 5 einstükkig verbundenen, wobei der Rastfinger 15 an den Befestigungsansatz 5 angegossen sein kann. Wichtig ist, daß der Rastfinger 15 eine zum Einrasten des Ansatzes 10 geeignete Form besitzt. Der Ansatz 10 kann mit seinem freien Ende ein Stück über die Oberkante des Rastfingers 15 hinaus stehen, so dass das überstehende Ende ohne Werkzeug leicht aus der Verrastung in dem Rastfinger 15 herausgeschwenkt werden kann. Auf diese Weise ergibt sich eine seitliche Einknüpfung des Ansatzes 10 in den Rastfinger 15.

Die Vorteile der hier beschriebenen Verbindungslösung sind:
- Einfache und sichere Behälterverriegelung.
- Einfache Behältermontage (kein Überdrücken, kein Einrasten des Behälters).Das Befestigungselement "Winkelstift" ist ein kostengünstig herzustellendes Biegeteil oder Kunststoffformteil.
- Durch die spiegelbildliche Anordnung der Einrastnuten ist eine beidseitige Montage jederzeit möglich.
- Montage ohne Werkzeug beliebig oft durchführbar. Demontage mit einfachen Hilfsmitteln schnell und beliebig oft durchführbar.
- Visuelle Kontrolle über korrekten Sitz des Sicherungselementes eindeutig.
- Einfache Durchgangsbohrung im THZ. (Kein Gewinde, keine Stufen usw.)universell kombinierbar mit allen Dichtelementen.

## Patentansprüche

1. Baugruppe bestehend aus einem Ausgleichsbehälter (1) und einem Hauptzylinder für eine Bremsanlage in einem Kraftfahrzeug, wobei der Ausgleichsbehälter mit dem Hauptzylinder über eine lösbare Verbindung verbunden ist, wobei der Ausgleichsbehälter (1) an einer, dem Hauptzylinder zugewandten Seite mit mindestens einem, vorzugsweise zwei Befestigungsansätzen (5,6) versehen ist und der bzw. die Befestigungsansätze (5,6) mit einer Öffnung (7,8) versehen sind, die mit einer entsprechenden Öffnung in dem Hauptzylinder im wesentlichen fluchtet oder rechtwinklig zu dieser steht und wobei ein Befestigungsstift (9) vorgesehen ist, welcher sich durch die fluchtenden Öffnungen (7,8) erstreckt, wobei der Befestigungsstift (9) einen außerhalb der Öffnungen befindlichen Ansatz (10) aufweist, welcher im wesentlichen quer zur Erstreckungsrichtung des Befestigungsstiftes (9) verläuft, **dadurch gekennzeichnet, dass** im Bereich des Befestigungsansatzes (5,6) an dem Ausgleichsbehälter (1) Arretierungsmittel (11,12,15) vorgesehen sind, welche den Befestigungsstift (9) gegen eine Bewegung in axialer Richtung sichern.

2. Baugruppe nach Anspruch 1, **dadurch gekennzeichnet, dass** die Arretierungsmittel (12,11,15) an dem Ansatz (10) des Befestigungsstiftes (10) rastend angreifen und hierdurch den Befestigungsstift (9) in seiner axialen Richtung sichern.

3. Baugruppe nach Anspruch 2, **dadurch gekennzeichnet, dass** die Arretierungsmittel (11,12) aus zwei parallelen, mit dem Befestigungsansatz (5,6) einstückig verbundenen Federleisten (11,12) bestehen, die von der Ebene des Befestigungsansatzes (5,6) senkrecht abstehen und zwischen welche der Ansatz (10) des Befestigungsstiftes (9) in axialer Richtung oder rechtwinklig zur axialen Richtung einrastbar ist.

4. Baugruppen nach Anspruch 2, **dadurch gekennzeichnet, dass** die Arretierungsmittel (15) aus einem Rastfinger (15) bestehen in den der Ansatz (10) des Befestigungsstiftes (9) parallel zur Außenfläche des Befestigungsansatzes (5) verschwenkbar ist, von der der Rastfinger (15) absteht.

5. Baugruppe nach einem der vorangegangenen Ansprüche, **dadurch gekennzeichnet, dass** der Ausgleichsbehälter (1) mit zwei, einen Befestigungsvorsprung des Hauptzylinders umgreifenden Befestigungsansätzen (5,6) versehen ist, wobei jede der Befestigungsansätze (5,6) mit dem Arretierungsmittel (11,12,15) versehen ist.

## Claims

1. An assembly comprising a supply tank (1) and a master cylinder for a brake system in a motor vehicle, wherein the supply tank is connected to the master cylinder by way of a detachable connection, wherein the supply tank (1) is provided with at least one, preferably two mounting projections (5, 6) on a side facing the master cylinder and the mounting projection(s) (5, 6) being provided with an opening (7, 8) which is substantially in alignment with a corresponding opening in the master cylinder or extends at right angles therewith, and wherein an attaching pin (9) is provided that extends through the aligning openings (7, 8), wherein the attaching pin (9) has a projection (10) being disposed outside the openings and extending substantially transversely to the direction the attaching pin (9) extends,
**characterized in that** fixing means (11, 12, 15) are provided at the supply tank (1) in the area of the mounting projection (5, 6), said means protecting the attaching pin (9) against a movement in an axial direction.

2. The assembly as claimed in claim 1,
**characterized in that** the fixing means (12, 11, 15) lockingly engage the projection (10) of the attaching pin (10) and hereby secure the attaching pin (9) in position in its axial direction.

3. The assembly as claimed in claim 2,
**characterized in that** the fixing means (11, 12) are composed of two parallel spring contact strips (11, 12) integrally connected to the mounting projection (5, 6), which strips project vertically from the plane of the mounting projection (5, 6) and between which the projection (10) of the attaching pin (9) can be locked in an axial direction or at right angles relative to the axial direction.

4. The assembly as claimed in claim 2,
**characterized in that** the fixing means (15) comprises a stop finger (15) into which the projection (10) of the attaching pin (9) can be swivelled in parallel to the outside surface of the mounting projection (5), from which the stop finger (15) projects.

5. The assembly as claimed in any one of the preceding claims,
**characterized in that** the supply tank (1) is provided with two mounting projections (5, 6) that embrace a mounting projection of the master cylinder, and each of the mounting projections (5, 6) is provided with the locking means (11, 12, 15).

## Revendications

1. Ensemble constitué d'un réservoir d'égalisation (1) et d'un cylindre principal pour un système de freinage d'un véhicule automobile, le réservoir d'égalisation étant relié au cylindre principal par une liaison détachable, le réservoir d'égalisation (1) étant pourvu d'au moins un, de préférence de deux appendices de fixation (5, 6) sur un côté tourné vers le cylindre principal, et le ou les appendices de fixation (5, 6) étant pourvus d'une ouverture (7, 8) qui est sensiblement alignée avec une ouverture correspondante du cylindre principal ou se trouve à angle droit avec celle-ci, et une tige de fixation (9) étant prévue qui s'étend à travers les ouvertures alignées (7, 8), la tige de fixation (9) comportant un appendice (10) se trouvant à l'extérieur des ouvertures et s'étendant sensiblement transversalement à la direction d'étendue de la tige de fixation (9), **caractérisé en ce que** dans la zone de l'appendice de fixation (5, 6) sont prévus, sur le réservoir d'égalisation (1), des moyens d'arrêt (11, 12, 15) qui bloquent la tige de fixation (9) contre un déplacement dans la direction axiale.

2. Ensemble selon la revendication 1, **caractérisé en ce que** les moyens d'arrêt (12, 11, 15) agissent par accrochage sur l'appendice (10) de la tige de fixation (9) et de ce fait bloquent la tige de fixation (9) dans sa direction axiale.

3. Ensemble selon la revendication 2, **caractérisé en ce que** les moyens d'arrêt (11, 12) sont constitués de deux baguettes élastiques (11, 12) parallèles, reliées d'une seule pièce à l'appendice de fixation (5, 6), qui s'écartent perpendiculairement du plan de l'appendice de fixation (5, 6) et entre lesquelles l'appendice (10) de la tige de fixation (9) peut s'accrocher dans la direction axiale ou perpendiculairement à la direction axiale.

4. Ensemble selon la revendication 2, **caractérisé en ce que** les moyens d'arrêt (15) sont constitués d'un doigt d'encliquetage (15) dans lequel l'appendice (10) de la tige de fixation (9) peut pivoter parallèlement à la surface extérieure de l'appendice de fixation (5) de laquelle le doigt d'encliquetage (15) s'écarte.

5. Ensemble selon l'une des revendications précédentes, **caractérisé en ce que** le réservoir d'égalisation (1) est pourvu de deux appendices de fixation (5, 6) entourant une saillie de fixation du cylindre principal, chacun des appendices de fixation (5, 6) étant pourvu du moyen d'arrêt (11, 12, 15).
